# EUROPEAN PATENT SPECIFICATION

(11) **EP 0 506 095 B1**
(45) Date of publication and mention of the grant of the patent: **06.12.1995**
(21) Application number: 92105325.2
(22) Date of filing: 27.03.1992
(51) Int. Cl.: C08L 51/04, C08L 77/00

(54) **Thermoplastic compositions with improved mechanical characteristics**
Thermoplastische Zusammensetzungen mit verbesserten mechanischen Eigenschaften
Compositions thermoplastiques avec caractéristique mécanique améliorée

(30) Priority: 29.03.1991 IT MI910890
(43) Date of publication of application: 30.09.1992
(73) Proprietor: ENICHEM S.p.A., 20124 Milano (IT)
(72) Inventor: Ghidoni, Dario, Dr., I-46023 Gonzaga, Mantova (IT); Fasulo, Gian Claudio, Dr., I-46010 San Silvestro, Mantova (IT); Borghi, Italo, Dr., I-44100 Ferrara (IT)
(74) Representative: Barz, Peter, Dr.

(56) References cited:
- EP-A- 0 278 500
- EP-A- 0 377 511
- WO-A-89/01962
- WO-A-90/03418

## Description

The present invention relates to thermoplastic compositions with improved mechanical characteristics.

More specifically, the present invention relates to thermoplastic compositions based on impact-resistant vinylaromatic (preferably styrenic) graft copolymer, polyamide and polyolefin which are particularly suitable for injection moulding and thermoforming.

It is well-known that impact-resistant vinylaromatic copolymers are obtained by bulk polymerization or bulk-suspension polymerization of solutions of olefinic rubbers, of the ethylene-propylene (EPM) or ethylene-propylene-diene (EPDM) type, in a vinylaromatic monomer, alone or in admixture with other copolymerizable ethylenically unsaturated monomers.

Styrene-acrylonitrile copolymers grafted onto olefinic rubbers (AES) have excellent impact strength but their low thermoresistance makes them unsuitable for certain applications where temperatures of 120-160°C are used or for the manufacture of products which come into contact with parts heated up to these temperatures.

To overcome this defect in AES copolymers, it is conventional practice to mix them with other polymers which have a good thermoresistance, such as polyamides. Polyamides show in fact good elongation, high energy absorption, especially in ball drop tests, and excellent thermoresistance. However, their high sensitivity to notching and their high water absorption limits their use considerably. In addition, polyamides are not too compatible with impact-resistant vinylaromatic copolymers and, consequently, the interfaces between the domains of the components of the mixture represent extremely weak areas along which breakage of the material occurs.

To make polyamides compatible with the impact-resistant vinylaromatic polymers, IT-A-20921 A/90, proposes the use of an impact-resistant vinylaromatic graft copolymer containing in its chain units deriving from an ethylenically unsaturated comonomer having a carboxylic group or a functional derivative thereof.

In particular, the above IT-A relates to a thermoplastic composition comprising:
(A) from 10 to 90% by weight of an impact-resistant vinylaromatic graft copolymer composed of a vinylaromatic monomer - ethylenically unsaturated acrylic monomer - copolymer and an olefinic elastomer, said copolymer being at least partially grafted onto said olefinic elastomer, and containing from 0.1 to 2% by weight of grafted ethylenically unsaturated monomer containing in the molecule a carboxylic group or one of its functional derivatives, such as anhydride, amide or ester;
(B) from 90 to 10% by weight of a polyamide resin.

The above compositions, however, still do not have a combination of properties suitable for all intended applications. In particular, the ultimate elongation is rather limited. This elongation can be improved by increasing the content of ethylenically unsaturated compound containing a carboxylic group (or one of its derivatives) in the vinylaromatic copolymer. This increase, however, adversely affects other characteristics, such as the tensile modulus.

WO 89/01962 discloses high-impact polymer blends comprising a styrene polymer modified by grafting with an unsaturated grafting agent, and a second polymer having end groups or pendant groups which are reactive with the pendant reactive functionalities of the graft-modified styrene polymer. Suitable second polymers are, e.g., functionalized polyolefins, polyesters and polyamides.

It has now been found that the addition of a suitable quantity of polyolefin to thermoplastic compositions comprising the above-mentioned components (A) and (B) results in compositions having an excellent combination of properties, making them applicable in all fields where extremely high values of ultimate elongation and resilience combined with satisfactory modulus and processability values are required.

Accordingly, the present invention provides thermoplastic compositions having an excellent balance of mechanical, thermal and rheological properties and comprising:
(A) from 10 to 90% by weight of impact-resistant vinylaromatic graft copolymer (preferably composed of vinylaromatic monomer-ethylenically unsaturated acrylic monomer-copolymer and olefinic elastomer, said copolymer being at least partially grafted onto said olefinic elastomer) containing from 0.1 to 2%, preferably 0.3 to 1% by weight of units derived from one or more ethylenically unsaturated compounds containing in the molecule at least one carboxylic group and/or a functional derivative thereof selected from anhydride, amide or ester groups;
(B) from 90 to 10% by weight of polyamide resin; and
(C) from 1 to 10 parts by weight, with respect to the mixture of graft copolymer (A) and polyamide resin (B), of polyolefin.

The weight ratio graft copolymer/polyamide resin (A/B) preferably ranges from 70:30 to 30:70 and particularly from 60:40 to 40:60 and the quantity of polyolefin (C) preferably ranges from 1 to 5, particularly 1.5 to 3 parts by weight, with respect to the mixture of (A) plus (B).

Component (A) of the thermoplastic composition of the present invention is an impact-resistant vinylaromatic graft copolymer which preferably comprises:
- 100 parts by weight of an impact-resistant vinylaromatic graft copolymer composed of 90 to 30% by weight of vinylaromatic monomer-ethylenically unsaturated acrylic monomer-copolymer at least partially grafted onto 10-70% by weight of olefinic elastomer, and
- from about 0.1 to 2 parts by weight of units derived from ethylenically unsaturated compound containing in the molecule at least one carboxylic group or a functional derivative thereof selected from anhydride, amide or ester groups; said
   compound being preferably grafted onto said impact-resistant, vinylaromatic copolymer.

In the vinylaromatic monomer-ethylenically unsaturated acrylic monomer-copolymer the weight ratio of the two types of monomers preferably ranges from 90:10 to 50:50, particularly from 80:20 to 60:40.

The graft copolymer (A) used in the compositions of the present invention can be prepared either by direct polymerization of the constituent monomers or by grafting the ethylenically unsaturated compound containing a carboxylic group or one of its functional derivatives onto the preformed impact-resistant copolymer composed of vinylaromatic monomer - ethylenically unsaturated acrylic monomer - copolymer and olefinic elastomer, e.g., in an extruder and in the presence of a peroxidic catalyst and at a temperature at least equal to that of the melting point of the components.

The polymerization is preferably carried out continuously, using a solution in an inert solvent of a mixture of monomers which includes a vinylaromatic compound, an ethylenically unsaturated acrylic monomer and an ethylenically unsaturated monomer containing a carboxylic group and/or a functional derivative thereof in the molecule as well as an olefinic elastomer and a polymerization initiator.

Preferably the polymerization is carried out in one or two steps, in series, and in each step the reaction mass is gently and homogeneously stirred to ensure a perfect thermal exchange.

For example, the olefinic elastomer and the initiator may homogeneously be dissolved in the monomers and in the solvent and the solution may be fed to the first step, at a constant temperature of from 100 to 250°C. The polymerization may then be continued in the following step(s) at a temperature of from 70 to 150°C and at a higher pressure than that at which the monomers and solvent employed boil. At the end of the polymerization, the reaction mass may be caused to flow through a thin film evaporator heated to a temperature of from 150 to 300°C and equipped with rotating blades which subject the polymer to a shearing force which is sufficient to provide the required morphological structure. The unreacted monomers and the solvent, recovered by the evaporator, may then be recycled to the first step.

This process allows the polymerization of the monomers to be carried out under conditions of gentle stirring but at the same time with an excellent thermal control of the reaction without having to take into consideration the size and the structure of the particles, which are regulated in the finishing step in the thin film evaporator where the unreacted monomers and the solvent are eliminated and, at the same time, the dimensions of the particles may be reduced to values lower than 1 »m and preferably to from 0.1 - 0.4 »m, by means of a dynamic action which induces a change in the structure of the elastomeric phase.

The solvent used preferably is an aromatic hydrocarbon, such as benzene, toluene, ethyl-benzene, xylene, isopropyl-benzene etc. The quantity of solvent usually ranges from 50 to 300 and preferably from 60 to 150 parts by weight for 100 parts by weight of elastomer plus monomers.

The polymerization reaction, like almost all solution graft polymerization reactions, is preferably carried out in the presence of a radicalic polymerization initiator. Any well-known radicalic initiator can be used even if organic peroxides generally used in graft-polymerizations are preferred. Examples of suitable organic peroxides are aromatic diacyl-peroxides, such as benzoyl-peroxide; peroxy-esters, such as t-butyl-peroxy-isobutyrate, t-butyl-peroxylaurate, t-butyl-peroxy-benzoate; perketals, such as 1,1-di-t-butyl-peroxy-3,3,5-trimethyl-cyclohexane and 2,2-di-t-butyl-peroxy-butane; peroxy-carbonates, such as t-butyl-peroxy-isopropylcarbonate; and peroxy-ketones, such as 1,1-bis-t-butyl-peroxy-3,3,5-trimethyl-cyclohexanone. It is also possible to use mixtures of two or more of the above-mentioned peroxides. The quantity of peroxide used generally is such that the conversion ranges from 40 to 80% by weight in the first polymerization reactor; generally quantities of from 0.1 to 2.0% by weight, with respect to the sum of monomers and elastomer, are used.

The thin film evaporator used in the above process for the finishing and formation of the required morphology of the particles can be any of the known types. In particular, the thin film evaporator described in EP-A-267025 is preferred.

The continuous polymerization process in solution specified above is known and described, e.g., in EP-A-286071.

The graft copolymer (A) used in the compositions of the present invention can also be prepared in an extruder or any other heat mixing apparatus, by means of direct reaction of the preformed impact-resistant copolymer composed of vinylaromatic monomer, ethylenically unsaturated acrylic monomer and olefinic elastomer with the ethylenically unsaturated compound containing a carboxylic group and/or one of its functional derivatives, preferably in the presence of a peroxidic initiator having a half-life, at 200°C, of from 2 to 20 sec.

It is preferable to carry out the reaction at temperatures higher than 150°C, and particularly of from 170 to 250°C, for more than 15 sec.

Examples of suitable peroxidic initiators are t-butyl-cumeneperoxide, bis(t-butyl-peroxy-isopropyl)benzene, di-t-butyl-peroxide, 2,5-dimethyl-2,5-di-t-butyl-peroxy hexane, dicumene peroxide etc. All of these peroxides are commercially available, e.g. under the tradenames Trigonox® and Perkadox® (AKZO).

Concentrations of peroxidic initiator of from 0.01 to 1 and preferably of from 0.1 to 0.5 parts by weight per 100 parts by weight of impact-resistant copolymer are generally used.

The vinylaromatic monomer(s) used for the production of the graft copolymer (A) preferably is (are) of general formula (I): 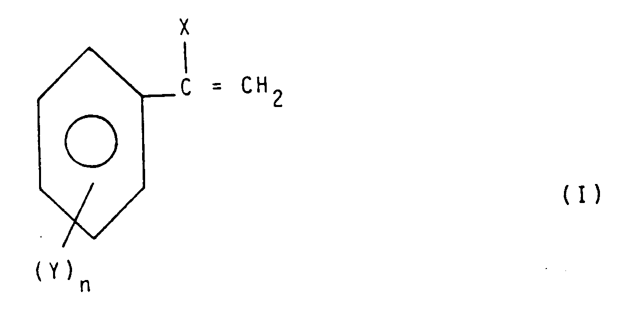
wherein:
X represents hydrogen or C₁-C₄-alkyl (e.g. methyl or ethyl);
Y represents halogen or C₁-C₄-alkyl; and
n is 0 or an integer of from 1 to 5 (preferably 0, 1 or 2).

Specific examples of vinylaromatic monomers of general formula (I) are styrene; methyl-styrene; mono-, di-, tri-, tetra- and penta-chloro-styrene and the corresponding alpha-methyl-styrenes; styrenes alkylated in the nucleus and the corresponding alpha-methyl-styrenes such as ortho- and para-methyl-styrenes; ortho- and para-methyl-alpha-methyl-styrenes; 3,5-di-methyl-styrene and t-butyl-styrene.

These monomers can be used alone or in combination.

Styrene is the preferred vinylaromatic monomer.

The ethylenically unsaturated acrylic monomer(s) preferably is (are) of general formula (II): 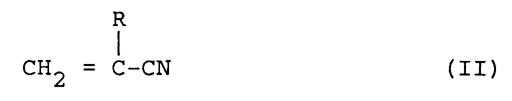
wherein R is hydrogen or C₁-C₅ alkyl (e.g. methyl). Acrylonitrile is the preferred monomer.

Olefinic elastomers suitable for use in the copolymers of the present invention include those of both high and low unsaturation. Among the low unsaturation elastomers mainly EPM and EPDM rubbers are to be mentioned, preferably having a weight ratio ethylene/propylene of from 90:10 to 20:80. The content of unconjugated diene preferably is from 4 to 50, in the terms of the iodine number. The unconjugated diene may be a norbornene; a cyclic diene, such as dicyclopentadiene and cyclooctadiene-1,5; and/or an aliphatic diene such as pentadiene-1,4; hexadiene-1,4; and hexadiene-1,5.

Preferred EPDM rubbers are terpolymers of ethylene/propylene/ 5-methyl-tetrahydroindene, ethylene/propylene/6-ethylidene-2-norbornene, ethylene/propylene/6-methylene-2-norbornene, and ethylene/propylene/5-ethylidene-2-norbornene.

The highly unsaturated elastomer may be a polybutadiene, a polyisoprene, a copolymer of butadiene and/or isoprene with styrene or other monomers or a polychloroprene.

The quantity of elastomer used preferably is such that the content of rubber in the final copolymer is within the range of from 10 to 70% by weight, preferably 15 to 40% by weight.

Any ethylenically unsaturated compound containing (preferably 2 to 30 carbon atoms and) at least one carboxylic group and/or a functional derivative thereof in the molecule may be used for the production of the graft copolymers (A). Specific examples of these compounds are maleic acid, fumaric acid, maleic anhydride, maleic amide, unsaturated monocarboxylic acids such as acrylic acid, methacrylic acid, crotonic acid, vinyl-acetic acid, 2-, 3- or 4-pentenoic acid, alpha-ethyl-acrylic acid, beta-methylcrotonic acid, 2-methyl-2-pentenoic acid, alpha-ethylcrotonic acid, 2,2-dimethyl-3-butenoic acid, heptenoic acid, 2-octenoic acid, 9-tetradecenoic acid, 9-hexadecenoic acid, 2-octadecenoic acid, 9-octadecenoic acid, decosenoic acid, erucic acid, 2,4-pentadienoic acid, diallyl-acetic acid, linoleic acid, linolenic acid, and esters, amides and anhydrides of these unsaturated acids.

The preferred ethylenically unsaturated monomers are maleic anhydride, maleimides and fumaric acid; maleic anhydride is particularly preferred, due to its high reactivity.

It is evident that in the graft polymerization not all of the unsaturated monomers are grafted onto the rubber substrate; a part of them may form free (co)polymers which are present in physical admixture with the graft copolymer.

The quantity of monomers grafted onto the rubber substrate can be determined by extracting the copolymer with a solvent of the non-grafted resin.

Polyamide resins (B) suitable for the purposes of the present invention are the conventional ones, which can be injection moulded, generally known as nylon resins, including aliphatic polylactams obtained by the ring opening of lactams and polyamides produced by polycondensation of an aliphatic diamine preferably containing from 4 to 14 carbon atoms with an aliphatic dicarboxylic acid preferably containing from 4 to 12 carbon atoms. Specific examples of suitable polyamide resins are nylon 4; nylon 6; nylon 7; nylon 11; nylon 12; nylon 6,6; nylon 6,9; nylon 6,10; nylon 6,12. Partially aromatic nylons may also be used as component (B) in the compositions of the present invention. The term "partially aromatic nylon" refers to those obtained by either partially or completely substituting an aliphatic residue of an aliphatic nylon by an aromatic residue.

For example, the residues of adipic acid in nylon 6,6 can be substituted by residues of terephthalic acid or isophthalic acid or mixtures thereof; similarly, some amine residues can have an aromatic character.

Preferred polyamide resins (B) are nylon 6, nylon 6,6 and the random copolymers of nylon 6 and nylon 6,6.

The average molecular weight of the polyamide resins is preferably higher than about 10,000, particularly higher than about 15,000 and may have values of up to 40,000. The melting point thereof preferably is higher than 200°C.

The polyolefin used as component (C) in the compositions of the present invention is preferably selected from polyethylene, polypropylene and ethylene-propylene-copolymers having a predominant amount of ethylene, such as copolymers composed of from 75 to 98% by weight of ethylene and from 25 to 2% by weight of propylene. Polybutene and polypentene may also be used to advantage.

The term "polyethylene" preferably denotes polymers of ethylene having a density of from 0.90 to 0.97 g/cm³, among which there are those known as low density polyethylene (LDPE), linear low density polyethylene (LLDPE), and high density polyethylene (HDPE). These polymers are commercially available, e.g. under the tradenames ESCORENE® LL 1201 (LLDPE; EXXON); RIBLENE® AK 1912 (LDPE; ENICHEM); ERACLENE® HU 5013 (HDPE, ENICHEM).

Linear low density polyethylene (LLDPE) is particularly preferred in the compositions of the present invention in that, especially in concentrations of from 2 to 3 parts by weight per 100 parts by weight of the sum of components (A) and (B), it affords the best results with respect to mechanical and physical properties and processability of the composition, as well as in terms of resilience (IZOD) ultimate elongation, flow modulus and melt flow index (MFI).

The compositions of the present invention can be prepared by mixing under heat in any known mixing unit having a medium or high mixing power, such as single and double-screw extruders, Banbury mixers and mixing rolls, preferably at a temperature of from about 220 to 260°C.

The compositions of the present invention can also contain conventional additives, such as heat stabilizers, UV stabilizers and/or other thoroughly incorporated additives, e.g., plasticizers, lubricants, flame-retardants, flow modifiers, antistatic agents, dyes, pigments, glass fibers or other inorganic charges.

The compositions of the present invention are easily processable and show a combination of properties which make them especially suitable for use in the manufacture of articles having a high impact strength combined with a high thermal resistance and a reduced sensitivity to water.

These compositions can be used, e.g., in the fields of motor-transport, for the production of pieces which can be oven-pointed, for parts which come into contact with the engine, electrical appliances, electronic equipment and in general technical articles in the form of cups, boxes, containers, panels, sheets and rods.

The compositions can also be used for producing expanded items, using the techniques which are known in the art.

The following examples are to further illustrate the present invention but are not intended to limit it in any way.

In the examples, all parts and percentages are given by weight if not specified otherwise.

### EXAMPLES 1 - 4

Using a double-screw Baker-Perkins MPC V30 extruder, the following compositions (A) + (B) + (C) were extruded, with degassing and at a temperature of 240°C - 250°C:
(A) an impact-resistant styrene graft copolymer composed of 30% by weight of EPDM rubber having a Mooney viscosity (ML-4) of 62 - 72 at 100°C and an iodine number of 18, and 70% by weight of a styrene/acrylonitrile (SAN) copolymer (weight ratio 70/30) containing 0.2% by weight, with respect to the impact-resistant copolymer, of grafted maleic anhydride. This copolymer had been obtained in accordance with the process described in IT-A-20306 A/90.
(B) Nylon 6 produced by Montedipe under the tradename TERNIL® B 27 and having an average molecular weight of about 18,000.
(C) Linear low density polyethylene, produced by EXXON under the tradename EXCORENE® LL 1201.

The weight ratios of the constituents of the mixture are shown in Table 1.

Granules were obtained by cutting the strands leaving the extruder, and were dried for 2 - 4 hours at 80 - 90°C.

To evaluate the thermal and mechanical properties, the granules were injection moulded at a temperature of 220 - 240°C on a Negri & Bossi V17 press to obtain test samples having the dimensions required by the corresponding ASTM standards.

The characteristics measured and the methods used were the following:

### Mechanical Properties

The ultimate elongation was determined in tensile tests, together with the ultimate tensile strength, the yield point and tensile modulus, in accordance with ASTM D 638, and the IZOD resilience was determined in accordance with ASTM D 256, all on test samples having a thickness of 12.7 mm.

### Thermal properties

The VICAT A softening point (1 kg in oil) was determined in accordance with ISO 306.

### Rheological properties

The Melt Flow Index (M.F.I.) was determined in accordance with ASTM D 1238, at 260°C and 5 kg.

The properties measured are shown in the following table.

**TABLE**

| COMPOSITIONS | | EXAMPLES | | | |
|---|---|---|---|---|---|
| | | 1* | 2 | 3 | 4 |
| (A) Graft impact-resistant styrene copolymer (% b.w.) | | 50 | 50 | 50 | 50 |
| (B) TERNIL ®B 27 (% b.w.) | | 50 | 48.5 | 47.5 | 46 |
| (C) EXCORENE ®LL 1201 (% b.w.) | | -- | 1.5 | 2.5 | 4 |

| PROPERTY | UNIT | | | | |
|---|---|---|---|---|---|
| IZOD | J/m | 100 | 320 | 780 | 330 |
| Tensile modulus | N/mm² | 1650 | 1800 | 1650 | 1700 |
| Ultimate tensile strength | N/mm² | 40 | 43 | 40 | 44 |
| Yield point | N/mm² | 37 | 39 | 36 | 37 |
| Elongation | % | 120 | 180 | 280 | 220 |
| VICAT A | °C | 192 | 193 | 191 | 188 |
| M.F.I. 260°C/5 kg | g/10' | 6 | 10.4 | 10.7 | 11 |

| | | | | | |
|---|---|---|---|---|---|
| * Comparison example | | | | | |

### EXAMPLE 5

Example 3 was repeated, substituting ESCORENE® LL 1201 with ERACLENE® HUG 5013, a high density polyethylene produced and sold by ENICHEM S.p.A.

The properties of the mixture thus obtained were:

| | |
|---|---|
| IZOD | 254 J/m |
| Tensile modulus | 1700 N/mm² |
| Ultimate tensile strength | 43 N/mm² |
| Yield point | 37 N/mm² |
| Elongation | 211 % |
| VICAT A | 188°C |
| M.F.I. (260°C/5 kg) | 10.5 g/10' |

## Claims

1. Thermoplastic compositions comprising
(A) from 10 to 90% by weight of impact-resistant vinylaromatic graft copolymer containing from 0.1 to 2% by weight of units derived from one or more ethylenically unsaturated compounds having in the molecule at least one carboxylic group and/or a functional derivative thereof selected from anhydride, amide or ester groups;
(B) from 90 to 10% by weight of polyamide resin; and
(C) from 1 to 10 parts by weight, with respect to the mixture of (A) plus (B), of polyolefin.

2. Compositions according to claim 1, wherein the weight ratio (A):(B) ranges from 70:30 to 30:70, the amount of component (C) preferably ranging from 1 to 5 parts by weight with respect to (A) + (B).

3. Compositions according to any one of claims 1 and 2, wherein component (A) comprises a vinylaromatic monomer - ethylenically unsaturated acrylic monomer - copolymer and an olefinic elastomer, said copolymer being at least partially grafted onto said elastomer, and contains from 0.1 to 2% by weight of grafted units derived from ethylenically unsaturated compound containing in the molecule at least one carboxylic group and/or a functional derivative thereof.

4. Compositions according to any one of claims 1 to 3, wherein component (A) comprises, per 100 parts by weight of impact-resistant vinylaromatic graft copolymer composed of from 90 to 30% by weight of vinylaromatic monomer-ethylenically unsaturated acrylic monomer-copolymer which is at least partially grafted onto 10 - 70% by weight of olefinic elastomer, from about 0.1 to 2, preferably from about 0.3 to 1, parts by weight of units derived from ethylenically unsaturated compound containing in the molecule a carboxylic group and/or a functional derivative thereof, said ethylenically unsaturated compound being preferably grafted onto said impact-resistant vinylaromatic copolymer.

5. Compositions according to any one of claims 1 to 4, wherein the weight ratio vinylaromatic monomer/ethylenically unsaturated acrylic monomer in the impact-resistant vinylaromatic graft copolymer ranges from 90:10 to 50:50, particularly from 80:20 to 60:40.

6. Compositions according to any one of claims 1 to 5, wherein said vinylaromatic monomer comprises styrene.

7. Compositions according to any one of claims 3 to 6, wherein said ethylenically unsaturated acrylic monomer comprises acrylonitrile.

8. Compositions according to any one of claims 1 to 7, wherein component (A) comprises an olefinic elastomer having a low content of unsaturation, particularly EPM and/or EPDM wherein the weight ratio ethylene/propylene ranges from 90:10 to 20:80 and the content of unconjugated diene, if any, ranges from 4 to 50 in terms of the iodine number.

9. Compositions according to any one of claims 1 to 8, wherein said ethylenically unsaturated compound containing a carboxylic group and/or a functional derivative thereof in the molecule comprises maleic anhydride.

10. Compositions according to any one of claims 1 to 9, wherein the polyamide resin (B) comprises nylon 6 having an average molecular weight of at least about 10,000, preferably at least about 15,000, and up to 40,000.

11. Compositions according to any one of claims 1 to 10, wherein the polyolefin (C) is selected from polyethylene having a density of from 0.90 to 0.97 g/cm³, polypropylene, ethylene-propylene copolymers having an ethylene content of from 75 to 98% by weight and mixtures of said polymers; and preferably is linear low density polyethylene.

12. Compositions according to claim 11, wherein the concentration of said linear low density polyethylene (C) is from 2 to 3 parts by weight, with respect to components (A) + (B).

13. Molded articles, made from a composition according to any one of the preceding claims and preferably produced by injection moulding or thermoforming.

## Patentansprüche

1. Thermoplastische Zusammensetzungen, umfassend
(A) 10 bis 90 Gewichts-% schlagzähes vinylaromatisches Pfropf-Copolymer, enthaltend 0,1 bis 2 Gewichts-% Einheiten, die von einer oder mehreren ethylenisch ungesättigten Verbindungen, die in ihrem Molekül mindestens eine Carboxylgruppe und/oder ein aus Anhydrid-, Amid- oder Estergruppen ausgewähltes funktionelles Derivat davon aufweisen, abgeleitet sind;
(B) 90 bis 10 Gewichts-% Polyamid-Harz; und
(C) 1 bis 10 Gewichts-%, bezogen auf die Mischung von (A) plus (B), Polyolefin.

2. Zusammensetzungen nach Anspruch 1, in welchen das Gewichtsverhältnis (A):(B) im Bereich von 70:30 bis 30:70 liegt, wobei die Menge an Komponente (C) vorzugsweise im Bereich von 1 bis 5 Gewichtsteilen, bezogen auf (A) + (B), liegt.

3. Zusammensetzungen nach irgendeinem der Ansprüche 1 und 2, in welchen die Komponente (A) ein vinylaromatisches Monomer-ethylenisch ungesättigtes acrylisches Monomer-Copolymer und ein olefinisches Elastomer umfaßt, wobei das Copolymer zumindest teilweise auf das Elastomer gepfropft ist, und 0,1 bis 2 Gewichts-% von ethylenisch ungesättigter Verbindung, die in dem Molekül mindestens eine Carbonsäuregruppe und/oder ein funktionelles Derivat davon enthält, abgeleitete gepfropfte Einheiten enthält.

4. Zusammensetzungen nach irgendeinem der Ansprüche 1 bis 3, in welchen die Komponente (A) pro 100 Gewichtsteile schlagzähes vinylaromatisches Pfropf-Copolymer, das aus 90 bis 30 Gewichts-% vinylaromatisches Monomer-ethylenisch ungesättigtes acrylisches Monomer-Copolymer, das zumindest teilweise auf 10 - 70 Gewichts-% olefinisches Elastomer gepfropft ist, zusammengesetzt ist, etwa 0,1 bis 2, vorzugsweise etwa 0,3 bis 1, Gewichtsteile Einheiten umfaßt, die von ethylenisch ungesättigter Verbindung abgeleitet sind, die im Molekül eine Carbonsäuregruppe und/oder ein funktionelles Derivat davon enthält, wobei die ethylenisch ungesättigte Verbindung vorzugsweise auf das schlagzähe vinylaromatische Copolymer gepfropft ist.

5. Zusammensetzungen nach irgendeinem der Ansprüche 1 bis 4, in welchen das Gewichtsverhältnis vinylaromatisches Monomer/ethylenisch ungesättigtes acrylisches Monomer in dem schlagzähen vinylaromatischen Pfropf-Copolymer im Bereich von 90:10 bis 50:50, insbesondere 80:20 bis 60:40, liegt.

6. Zusammensetzungen nach irgendeinem der Ansprüche 1 bis 5, in welchen das vinylaromatische Monomer Styrol umfaßt.

7. Zusammensetzungen nach irgendeinem der Ansprüche 3 bis 6, in welchen das ethylenisch ungesättigte acrylische Monomer Acrylnitril umfaßt.

8. Zusammensetzungen nach irgendeinem der Ansprüche 1 bis 7, in welchen die Komponente (A) ein olefinisches Elastomer mit einem niedrigen Gehalt an Nichtsättigung, insbesondere EPM und/oder EPDM, worin das Gewichtsverhältnis Ethylen/Propylen im Bereich von 90:10 bis 20:80 liegt und der Gehalt an nicht-konguiertem Dien, falls vorhanden, im Bereich von 4 bis 50, ausgedrückt als Iodzahl, liegt, umfaßt.

9. Zusammensetzungen nach irgendeinem der Ansprüche 1 bis 8, in welchen die ethylenisch ungesättigte Verbindung, die ein Carbonsäuregruppe und/oder ein funktionelles Derivat davon im Molekül enthält, Maleinsäureanhydrid umfaßt.

10. Zusammensetzungen nach irgendeinem der Ansprüche 1 bis 9, in welchen das Polyamid-Harz (B) Nylon 6 mit einem durchschnittlichen Molekulargewicht von mindestens etwa 10000, vorzugsweise mindestens etwa 15000, und bis zu 40000, umfaßt.

11. Zusammensetzungen nach irgendeinem der Ansprüche 1 bis 10, in welchen das Polyolefin (C) aus Polyethylen mit einer Dichte von 0,90 bis 0,97 g/cm³, Polypropylen, Ethylen-Propylen-Copolymeren mit einem Ethylengehalt von 75 bis 98 Gewichts-% und Mischungen dieser Polymeren ausgewählt ist; und vorzugsweise lineares Polyethylen mit niedriger Dichte ist.

12. Zusammensetzungen nach Anspruch 11, in welchen die Konzentration des linearen Polyethylens niedriger Dichte (C) 2 bis 3 Gewichtsteile, bezogen auf die Komponenten (A) + (B), beträgt.

13. Formkörper, hergestellt aus einer Zusammensetzung nach irgendeinem der vorangehenden Ansprüche und vorzugsweise hergestellt durch Spritzguß oder Warmformen.

## Revendications

1. Compositions thermoplastiques comprenant :
A) de 10 à 90 % en poids d'un copolymère vinyl-aromatique de greffage, résistant aux chocs, contenant de 0,1 à 2 % en poids de motifs dérivés d'un ou de plusieurs composés à insaturation éthylénique dont la molécule comporte au moins un groupe carboxy et/ou un groupe fonctionnel dérivé d'un groupe carboxy, chois parmi les groupes anhydride, amide et ester,
B) de 90 à 10 % en poids d'une résine de polyamide, et
C) de 1 à 90 parties en poids, par rapport au mélange de (A) et (B), d'une polyoléfine.

2. Compositions conformes à la revendication 1, dans lesquelles le rapport pondéral (A)/(B) vaut de 70/30 à 30/70, et la quantité de composant (C) vaut de préférence de 1 à 5 parties en poids, par rapport à (A) + (B).

3. Compositions conformes à l'une des revendications 1 et 2, dans lesquelles le composant (A) comprend un copolymère d'un monomère vinyl-aromatique et d'un monomère acrylique à insaturation éthylénique et un élastomère oléfinique, ledit copolymère étant, au moins en partie, greffé sur ledit élastomère, et contient de 0,1 à 2 % en poids de motifs greffés, dérivés d'un composé à insaturation éthylénique dont la molécule comporte au moins un groupe carboxy et/ou un groupe fonctionnel dérivé d'un groupe carboxy.

4. Compositions conformes à l'une des revendications 1 à 3, dans lesquelles le composant (A) comprend, pour 100 parties en poids d'un copolymère vinyl-aromatique de greffage, résistant aux chocs, constitué de 90 à 30 % en poids d'un copolymère d'un monomère vinyl-aromatique et d'un monomère acrylique à insaturation éthylénique qui est, au moins en partie, greffé sur 10 à 70 % en poids d'un élastomère oléfinique, d'environ 0,1 à 2 et de préférence d'environ 0,3 à 1 parties en poids de motifs dérivés d'un composé à insaturation éthylénique dont la molécule comporte au moins un groupe carboxy et/ou un groupe fonctionnel dérivé d'un groupe carboxy, ledit composé à insaturation éthylénique étant de préférence greffé sur ledit copolymère vinyl-aromatique résistant aux chocs.

5. Compositions conformes à l'une des revendications 1 à 4, dans lesquelles le rapport pondéral du monomère vinyl-aromatique au monomère acrylique à insaturation éthylénique, au sein du copolymère vinyl-aromatique de greffage résistant aux chocs, vaut de 90/10 à 50/50, et en particulier de 80/20 à 60/40.

6. Compositions conformes à l'une des revendications 1 à 5, dans lesquelles ledit monomère vinyl-aromatique comprend du styrène.

7. Compositions conformes à l'une des revendications 3 à 6, dans lesquelles ledit monomère à insaturation éthylénique comprend de l'acrylonitrile.

8. Compositions conformes à l'une des revendications 1 à 7, dans lesquelles le composant (A) comprend un élastomère oléfinique contenant peu de liaisons insaturées, en particulier un EPM et/ou un EPDM où le rapport pondéral éthylène/propylène vaut de 90/10 à 20/80 et la teneur en diène non conjugué, s'il y en a, correspond à un indice d'iode valant de 4 à 50.

9. Compositions conformes à l'une des revendications 1 à 8, dans lesquelles ledit composé à insaturation éthylénique dont la molécule comporte au moins un groupe carboxy et/ou un groupe fonctionnel dérivé d'un groupe carboxy comprend de l'anhydride maléique.

10. Compositions conformes à l'une des revendications 1 à 9, dans lesquelles la résine de polyamide (B) comprend du nylon 6 dont la masse moléculaire moyenne vaut au moins environ 10 000, de préférence au moins environ 15 000, et au plus 40 000.

11. Compositions conformes à l'une des revendications 1 à 10, dans lesquelles la polyoléfine (C) est choisie parmi les polyéthylènes dont la masse volumique vaut de 0,90 à 0,97 g/cm³, les polypropylènes, les copolymères d'éthylène et de propylène dont la teneur en éthylène vaut de 75 à 98 % en poids, et les mélanges de tels polymères, et est de préférence un polyéthylène basse densité linéaire.

12. Compositions conformes à la revendication 11, dans lesquelles la quantité dudit polyéthylène basse densité linéaire (C) représente de 2 à 3 parties en poids, par rapport au total des composants (A) et (B).

13. Articles moulés, faits d'une composition conforme à l'une des revendications précédentes, et produits de préférence par moulage par injection ou par thermoformage.
